# EUROPEAN PATENT APPLICATION

(11) **EP 1 744 526 A1**
(43) Date of publication of application: **17.01.2007**
(21) Application number: 05015197.6
(22) Date of filing: 13.07.2005
(51) Int. Cl.: H04M 3/436, H04M 1/57, H04M 1/725

(54) **Method and apparatus for acquiring further information about caller using caller ID**

(71) Applicant: Sony Ericsson Mobile Communications AB, 221 88 Lund (SE)
(72) Inventor: Töörn, Fredrik, 212 36 Malmö (SE)
(74) Representative: Asketorp, Göran

(57) **Abstract**

On receiving the caller ID, a request for further information is sent from the called party to a server that searches its database for information that is associated with the caller ID of the calling party so as to obtain further information about the caller e.g. name, image, movie, ring tone, address or map showing the address or personal information. This information is then given to the called user before actually answering the call. Functionality also known as Enhanced caller ID.

## Description

### Technical Field of the Invention

The present invention relates to a method and a communication apparatus for acquiring information in the communication apparatus from a server device, which information is associated with received identification data.

### Description of Related Art

In connection with an incoming call, such as a voice or data call, to a communication apparatus, an identifier may be received. The identifier may identify the origin of the call and may e.g. be a telephone number of a subscription, a CLI (Caller Id) or a CLID (Calling Line IDentification). The name of a subscriber may be associated with the identifier and known to a server storing subscription data. In the communication apparatus, an address book may be stored. The address book may comprise telephone numbers and names and/or addresses with the telephone numbers. The stored names and telephone numbers may have a format corresponding to the format of the received identification data. Thus, if e.g. a telephone number is received as an identification data, it may be checked if the telephone number is present in the address book. If so, the name associated with the stored and received telephone number may be displayed in response to receiving the call.

In case the received identifier has no correspondence in the address book or anywhere else in the communication apparatus, the name associated with the received identifier cannot be displayed, only the number. Furthermore, the name associated with the received identification data has to be stored manually, which is inconvenient as it takes relatively long time.

### Summary of the Invention

It is an object of the invention to provide a method and apparatus for acquiring information associated with received identification data.

According to a first aspect, a method for acquiring information in a communication apparatus comprises receiving identification data for identifying the origin of an incoming call; generating an information request message including a request for information being associated with the identification data; transmitting the information request message to a server device; and receiving information being associated with said identification data.

The step of generating may comprise incorporating the received identification data into the information request message.

The step of receiving identification data may comprise receiving at least one of a caller identifier, a calling line identification, a telephone number and a name as the identification data.

The step of receiving identification data may comprise initiating a session for accessing an information network, to which the server device is connected, in response to receiving the identification data.

The step of receiving the identification data may comprise initiating a ringtone for announcing the incoming call after initiating the session for accessing the information network.

The step of receiving information may comprise receiving at least one of a name, a telephone number, an image, a movie, a ringtone, and personal information, which is associated with said identification data.

The step of receiving identification data may comprise determining whether the received identification data is associated with information stored in the communication apparatus, and only generate and transmit said request message if information associated with said identification data is not stored in said communication apparatus.

The step of receiving identification data may comprise determining a geographical area code of the identification data, and the step of transmitting comprises retrieving from a memory an address of the server device, to which the request message should be transmitted, based on said geographical area code.

According to a second aspect, a communication apparatus comprises a communication unit adapted to receive identification data for identifying the origin of an incoming call; and an identification processing unit adapted to generate an information request message including a request for information being associated with the identification data. The communication unit is adapted to transmit the information request message to a server device, and receive information being associated with said identification data.

The identification processing unit may be adapted to incorporate received identification data into the information request message.

The identification processing unit may be adapted to retrieve from received identification data at least one of a caller identifier, a calling line identification, a telephone number and a name as the identification data.

The communication apparatus may comprise a client unit adapted to initiate a session for accessing an information network, to which the server device is connected, in response to receiving the identification data.

The identification data processing unit may be adapted to initiate a ringtone for announcing the incoming call after the client unit has initiated the session for accessing the information network.

The identification data processing unit may be adapted to retrieve from received information at least one of a name, a telephone number, an image, a movie, a ringtone, and personal information, which is associated with said identification data.

The identification data processing unit may be adapted to determine whether the received identification data is associated with information stored in a memory of the communication apparatus, and to only generate said request message if any information associated with said identification data is not stored in said memory.

The identification data processing unit may be adapted to determine a geographical area code of the identification data, and to retrieve from a memory an address of the server device, to which the request message should be transmitted, based on said geographical area code.

The communication apparatus may be a portable or handheld mobile radio communication equipment, a mobile radio terminal, a mobile telephone, a pager, a communicator, an electronic organizer, a smartphone or a computer.

According to a third aspect, a computer program product comprises computer program code means for executing the method for acquiring information in a communication apparatus according to any of claims 1 to 8, when said computer program code means are run by an electronic device having computer capabilities.

According to a fourth aspect, a computer readable medium has stored thereon a computer program product, which comprises computer program code means for executing the method for acquiring information in a communication apparatus, when said computer program code means are run by an electronic device having computer capabilities.

Further embodiments of the invention are defined in the dependent claims.

It is an advantage of the invention that the possibility to acquire information associated with a received identifier is improved.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of embodiments of the invention, reference being made to the accompanying drawings, in which:
Fig. 1 is a schematic view of a communication apparatus connected to an information network through a communication network;
Fig. 2 is a block diagram of the communication apparatus; and
Fig. 3 is a flow-chart of a method for acquiring information in the communication apparatus.

### Detailed Description of Embodiments

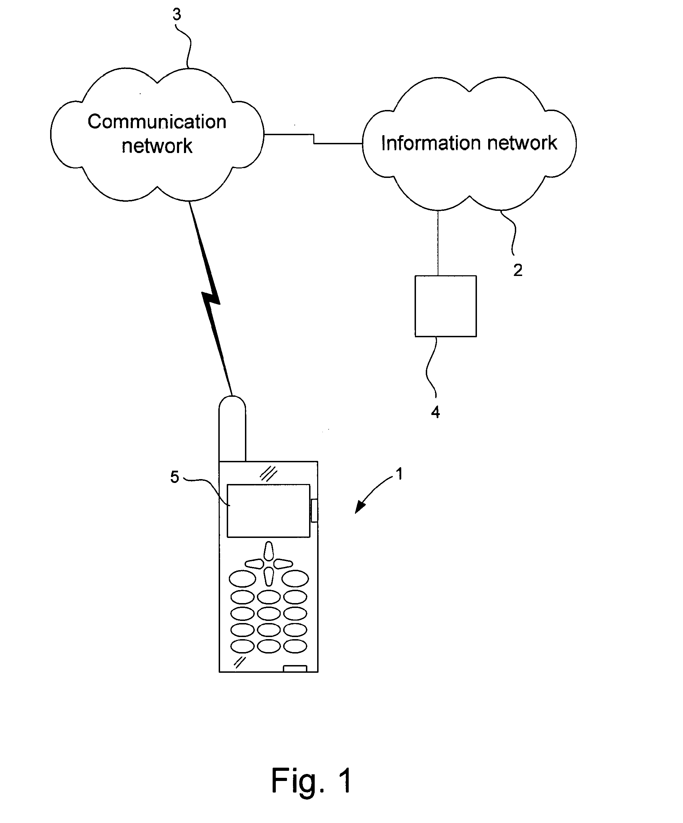

Fig. 1 illustrates a communication apparatus 1 connected to an information network 2 through a communication network 3. The communication apparatus 1 may alternatively be connected directly to the information network 2.

The communication apparatus 1 may be a wireless or wired communication apparatus, such as a portable or handheld mobile radio communication equipment, a mobile radio terminal, a mobile telephone, a pager, a communicator, an electronic organizer, a smartphone or a computer.

The communication network 3 may e.g. be a telecommunication network, such as a GSM (Global System for Mobile communication), a UMTS (Universal Mobile Telecommunication Standard), or a PDC (Personal Digital Cellular) network. The communication network 3 may alternatively be a WLAN (Wireless Local Area Network). In still an alternative embodiment, the communication network 3 is an IP (Internet Protocol) based network. The information network 2 may be WAN (Wide Area Network) or a global information network, such as the Internet. Alternatively, the information network 2 is a local information network, such as a LAN (Local Area Network)

A call to the communication apparatus 1 may be initiated from the communication network 3. The call may be a speech and/or a video call for voice communication or a packet call for delivering a data message, such as an SMS (Short Message Service), an EMS (Enhanced Media Service) or an MMS (Multimedia Message Service). Identification data for identifying the origin of an incoming call may be received in the communication apparatus 1 in connection with receiving the incoming call. The identification data may e.g. be the telephone number, a CLID (Calling Line Identification), a CLI (Caller Id), or a name associated with a subscription. The identification data may e.g. be received in a page message transmitted from the communication network 3 to alert the communication apparatus 1 of the incoming call and establish a connection therebetween. Alternatively, the identification data is received in a separate message or together with other information transmitted after the page message. In one embodiment, the identification message is transmitted once a communication channel between the communication network 3 and the communication apparatus 1 has been established 1.

The identification data may be associated with information, which e.g. may be stored at a server device 4. The server device 4 may be controlled by an operator having issued a subscription which is used for communicating with the communication apparatus 1. Alternatively, an independent operator may control the server device 4. The server device 4 may be accessible through the communication network 3 and/or the information network 2. Accessibility through an information network is an advantage as the number of different independent sources, i.e. server devices, to acquire information from may be numerous.

To access or acquire the information associated with the identification data, an information request message may be generated in the communication apparatus 1. The information request message may include a request for information, which is associated with the identification data received from the communication network 3. For example, the request may be generated by incorporating the received identification data into the information request message. Alternatively, the request may be generated by incorporating into the request message any information stored in the communication apparatus 1 and being associated with the received identification data. For example, if the identification data comprises a telephone number, the telephone number may be incorporated into the information request message. Alternatively, a name being associated with received identification data is stored in the communication apparatus 1. Then, the name and/or the identification data may be incorporated into the information request message to acquire further information associated with the identification data, such as an address.

The information request message may be generated in response to receiving the identification data. The information request message may be transmitted to the server device 4. In response to receiving the request message, the server device 4 may generate an information response message including the information stored at the server device 4 and being associated with the identification data. The information response message is received by the communication apparatus 1. Consequently, if the identification data only includes the telephone number of the subscription from which the incoming call originates, the name of the subscriber may be acquired by the communication apparatus 1 by interacting with the server device 4. Alternatively, if only the name of the subscriber is included in the identification data, the associated telephone number may be acquired. In another embodiment, both the subscriber name and the associated telephone number are included in the identification data. However, further information may be stored at the server device 4, which may be acquired by interacting with the server device 4. It is an advantage of the invention that that any information stored at a server device 4 and being associated with identification data may be retrieved. The information may be retrieved automatically without involvement of the operator of the communication apparatus 1. Thus, the user does not have to manually input received information associated with the identification data into the communication apparatus 1. Consequently, the communication apparatus 1 will be convenient to operate.

The information, which is associated with the identification data and which is stored at or being accessible by the server device 4, may e.g. include the name of the subscriber, additional numbers of the subscriber (e.g. home, office, mobile, pager, and/or fax numbers), images of the subscriber, the address of the subscriber, a map showing a geographical position of the address of the subscriber, geographical positioning data, a movie generated by the subscriber, a ring signal determined by the subscriber, or any other personal data of the subscriber. The information may e.g. be accessible through a web browser. Thus, any person having access to an account containing the information may edit information stored at the server device 4.

Once the information is received in the communication apparatus 1, it may be displayed in a display 5. The acquired information may also be stored in the communication apparatus 1, such as in the address book, once it has been received.

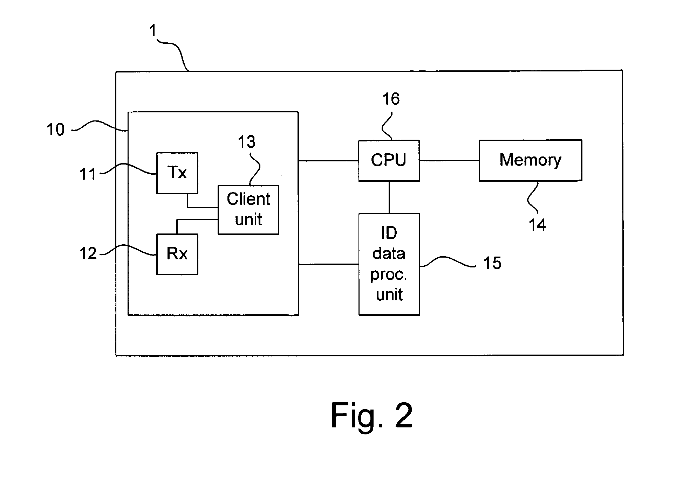

Fig. 2 illustrates various components of the communication apparatus 1. A communication unit 10 may be adapted to communicate with the information network 2 and/or the communication network 3. The communication unit 10 may comprise a transmitter unit (Tx) 11 and a receiver unit (Rx) 12. The communication unit may be adapted to transmit the information request message through the transmitter unit 11 to the server device 4. Also, communication unit may be adapted to receive the information through the receiver unit 12 from the server device 4. The communication unit 10 may also comprise a client unit 13, which is adapted to establish a session for accessing the information network 2. One or several memories may be provided in the communication apparatus 1, which are jointly illustrated by memory 14. Memory 14 may e.g. comprise a hard disc, RAM (Random Access Memory), a ROM (Read Only Memory), a flash memory, or a non-volatile memory. An identification data processing unit 15 may be adapted to process the identification data and the acquired information. A processor 16, such as a CPU, may be provided to enable various functions and applications of the communication apparatus 1.

The identification data processing unit 15 may be adapted to determine whether any identification data corresponding to the received identification data is stored in memory 14, e.g. in an address book thereof. The identification data processing unit 15 may match the received identification data with data of entries in e.g. the address book. The memory 14 may contain entries having a plurality of information fields, such as a telephone number, a name, an address, a ringtone, an image, a video, personal information, or a map field. Stored information of the entries may match the received identification data. If the received identification data do not match any information stored in an entry, information associated with the received identification data may be automatically downloaded from the server device 4. However, if the identification data match information of an entry, the identification data processing unit 15 will not request initiation of a session for acquiring further information from the server device 4. However, in another embodiment, the identification data processing unit 15 initiates a session for acquiring information from the server device 4 even if the received identification data matches information of an entry of memory 14. For example, the address book may comprise the name associated with a certain identification data but not the address. Then, the identification data processing unit 15 may initiate a session for acquiring said address. The identification data processing unit 15 may be adapted to request initiation of a session if any of the fields of an entry does not contain any information. Thus, any information lacking in an entry may automatically be acquired. Once acquired, the information may be automatically stored. Thus, entries of e.g. the address book may be automatically created and/or updated by receiving the identification data, transmitting the request message to the server device, and receiving the information from the server device 4.

In one embodiment, the identification data processing unit 15 is adapted to initiate of a session without receiving any identification data. Instead, the identification data processing unit 15 is adapted to initiate the session and request further information for the purpose of updating data stored in the memory 14. Thus, it may be assured that information stored in e.g. a phone book is updated. The updating may be carried out at predetermined intervals, such as once each day or week, or in response to a request made by an operator of the communication apparatus 1.

The client unit 13 may e.g. comprise a web browser, such as a WAP (wireless Application Protocol) or an HTML (HyperText Markup Language) browser, an e-mail client, or a messaging application or client, such as an SMS, an EMS, an MMS, a chat, or a synchronization client, or any IP based communication client unit. The client unit 13 is adapted to initiate the session for accessing the information network 2. The session may e.g. be established over a GPRS (General Packed Radio Service), EDGE (Enhanced Data for GSM Evolution), a GSM, a UMTS, or a PDC communication link, or any other IP based communication link, such as a WLAN, a LAN, an IR (InfraRed) or a Bluetooth® communication link.

The session may be initiated in response to receiving the identification data. In one embodiment, the session is initiated in response to receiving the identification data and before a ringtone for announcing the incoming call is generated. Thus, the time between the announcement of the incoming call until the information associated with the identification data has been received will be decreased. Thus, the experienced waiting time before e.g. a name associated with the identification data is displayed may be decreased.

The processor 16 may be responsible various functions and applications in the communication apparatus 1. For example, the processor 16 may implement the functions provided by the client unit 13 and/or the identification data processing unit 15 by running software programs provided by software code portions.

Each of the client unit 13 and the identification data processing unit 15 may alternatively be implemented by hardware, such as an ASIC (Application Specific Integrated Circuit) or an FPGA (Field Programmable Gate Array). Alternatively, the functions of each of the client unit 13 and the identification data processing unit 15 are implemented by a separate processor running software therefore.

In one embodiment, the identification data comprises a geographical area code. The identification data processing unit 15 may be adapted to retrieve and determine the geographical area code from the identification data. The geographical area code may be a prefix or country code number of the identification data, e.g. of a telephone number, such as +46 for Sweden or +1 for USA.

In the memory 14, a table comprising a plurality of server addresses to server devices, which stores information associated with identification data, may be stored. Each entry of the table may include a geographical area code associated with at least one server address to a server device 4. The identification data processing unit 15 may be adapted to match a received geographical area code of the identification data with a stored geographical area code. Then, the identification data processing unit 15 may retrieve from the memory 14 the server address, which is associated with the stored geographical area code that matches the received geographical area code. The information request message may be transmitted to the server device 4 having the retrieved server address. If the received geographical area code does not match any stored geographical area code, a predetermined server address may be used instead. As an example, if the geographical area code is +46, the server address may be www.hitta.se. If the geographical area code is +1, the server address may e.g. be www.find.com. The server address may also point towards an operator address. The operator address may be dependent on the geographical area code.

In another embodiment, if no information is received from a first server device in response to a first information request message, a second information request message may be transmitted to a second server device.

The identification request message may e.g. be generated as an HTML (HyperText Markup Language), an XML (Extensible Markup Language) or as a Vcard (Versitcard) message, or any other specified format.

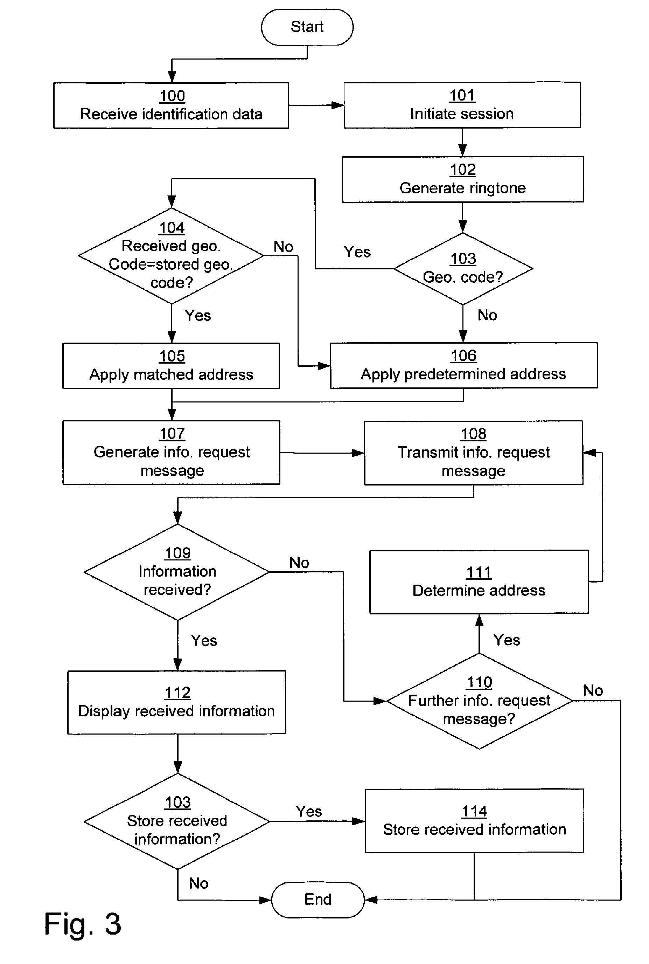

Fig. 3 illustrates a method for acquiring information in the communication apparatus 1. In a first step 100, identification data for identifying the origin of an incoming call is received. The identification data may be received in connection with the incoming call. In step 101, a session for accessing the information network 2 is initiated. The session may be automatically initiated in response to receiving the identification data, e.g. by transmitting an attach request to the communication network 3. In step 102 a ringtone for announcing the incoming call is generated. In step 103, it is determined whether the identification data comprises a geographical area code. If the answer in step 103 is yes, the procedure proceeds to step 104. In step 104, it is determined whether the received geographical area code matches any stored geographical area code. If the answer in step 104 is yes, the procedure proceeds to step 105. In step 105, the server address, which is associated with the stored geographical area code that matched the received geographical area code, is applied as the server address to which the information request message should be transmitted. If the answers in step 103 or 104 are no, the procedure proceeds to step 106. In step 106, a predetermined server address is applied as the server address to which the information request message should be transmitted. From steps 105 and 106, the procedure proceeds to step 107. In step 107, the information request message is generated. The information request message may e.g. be generated by incorporating into the message the received identification data. Alternatively, any other data or information, which is associated with the received identification data and stored in the communication apparatus 1, is included into the information request message. Then, the information request message is transmitted in step 108 to a server device 4 having the server address determined in steps 105 or 106. In step 109 it is determined whether a received information response message, which is generated and transmitted by the server device 4 in response to receiving the information request message, comprises any information associated with the identification data received in step 100. If the answer in step 109 is no, the procedure proceeds to step 110. In step 110, it is determined whether any further information request message should be transmitted. If the answer in step 110 is yes, the server address to which the further information request message should be transmitted is determined. Then, the procedure returns to step 107. If the answer in step 110 is no, the procedure ends. If the answer in step 109 is yes, the received information is displayed in step 112. In step 113, it is determined whether the received information should be stored. The information may be stored automatically or in response to a determination made by an operator of the communication apparatus 1. If the answer in step 113 is yes, the procedure proceeds to step 114, wherein the information is stored. If the answer in step 113 is no, the procedure ends.

In other embodiments of the invention, not all steps according to the embodiment of Fig. 3 is carried out, for example steps 103 and 104. Also, a predetermined address may always be applied. Furthermore, step 110-111 are not necessary in all embodiments of the invention. Also, it is not necessary to store the received information. Furthermore, in an alternative embodiment, the information request message is not transmitted to an information network 2. Instead, the information request message is transmitted to the server device 4 through the communication network 3, to which the server device 4 is connected.

The invention may be embedded in a computer program product, which enables implementation of the method and functions described herein. The invention may be carried out when the computer program product is loaded and run in a system having computer capabilities, such as processor 16. Computer program, software program, program product, or software, in the present context mean any expression, in any programming language, code or notation, of a set of instructions intended to cause a system having a processing capability to perform a particular function directly or after conversion to another language, code or notation.

Received information may comprise geographical positioning data. The geographical positioning data may comprise the present position of an apparatus being used by the subscriber associated with the identification data. Thus, if the communication apparatus 1 comprises a positioning unit, such as a GPS unit, e.g. the geographical position of the communication apparatus 1 relative the geographical position of the apparatus being used by the subscriber may be determined.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for acquiring information in a communication apparatus (1), comprising
receiving identification data for identifying the origin of an incoming call;
generating an information request message including a request for information being associated with the identification data;
transmitting the information request message to a server device (4); and
receiving information being associated with said identification data.

2. The method according to claim 1, wherein the step of generating comprises incorporating the received identification data into the information request message.

3. The method according to claim 1 or 2, wherein the step of receiving identification data comprises receiving at least one of a caller identifier, a calling line identification, a telephone number and a name as the identification data.

4. The method according to any of the previous claims, wherein the step of receiving identification data comprises initiating a session for accessing an information network (2), to which the server device (4) is connected, in response to receiving the identification data.

5. The method according to claim 4, wherein the step of receiving the identification data comprises initiating a ringtone for announcing the incoming call after initiating the session for accessing the information network (2).

6. The method according to any of the previous claims, wherein the step of receiving information comprises receiving at least one of a name, a telephone number, an image, a movie, a ringtone, and personal information, which is associated with said identification data.

7. The method according to any of the previous claims, wherein the step of receiving identification data comprises determining whether the received identification data is associated with information stored in the communication apparatus, and only generate and transmit said request message if information associated with said identification data is not stored in said communication apparatus (1).

8. The method according to any of the previous claims, wherein the step of receiving identification data comprises determining a geographical area code of the identification data, and the step of transmitting comprises retrieving from a memory (14) an address of the server device (4), to which the request message should be transmitted, based on said geographical area code.

9. A communication apparatus (1), comprising
a communication unit (10) adapted to receive identification data for identifying the origin of an incoming call; and
an identification processing unit (15) adapted to generate an information request message including a request for information being associated with the identification data; wherein
the communication unit is adapted to transmit the information request message to a server device (4), and receive information being associated with said identification data.

10. The communication apparatus according to claim 9, wherein the identification processing unit (15) is adapted to incorporate received identification data into the information request message.

11. The communication apparatus according to claim 9 or 10, wherein the identification processing unit (15) is adapted to retrieve from received identification data at least one of a caller identifier, a calling line identification, a telephone number and a name as the identification data.

12. The communication apparatus according to any of claims 9 to 11, wherein communication apparatus comprises a client unit (13) adapted to initiate a session for accessing an information network (2), to which the server device (4) is connected, in response to receiving the identification data.

13. The communication apparatus according to claim 12 wherein the identification data processing unit (15) is adapted to initiate a ringtone for announcing the incoming call after the client unit (13) has initiated the session for accessing the information network (2).

14. The communication apparatus according to any of claims 9 to 13, wherein the identification data processing unit (15) is adapted to retrieve from received information at least one of a name, a telephone number, an image, a movie, a ringtone, and personal information, which is associated with said identification data.

15. The communication apparatus according to any of claims 9 to 14, wherein the identification data processing unit (15) is adapted to determine whether the received identification data is associated with information stored in a memory (14) of the communication apparatus (1), and to only generate said request message if any information associated with said identification data is not stored in said memory.

16. The communication apparatus according to any of claims 9 to 15, wherein the identification data processing unit (15) is adapted to determine a geographical area code of the identification data, and to retrieve from a memory (14) an address of the server device (4), to which the request message should be transmitted, based on said geographical area code.

17. The communication apparatus according to any of claims 9 to 16, wherein the communication apparatus is a portable or handheld mobile radio communication equipment, a mobile radio terminal, a mobile telephone, a pager, a communicator, an electronic organizer, a smartphone and a computer.

18. A computer program product comprising computer program code means for executing the method according to any of claims 1 to 8, when said computer program code means are run by an electronic device having computer capabilities.

19. A computer readable medium having stored thereon a computer program product comprising computer program code means for executing the method according to any of claims 1 to 9, when said computer program code means are run by an electronic device having computer capabilities.
